# EUROPÄISCHE PATENTSCHRIFT

(11) **EP 3 577 420 B1**
(45) Veröffentlichungstag und Bekanntmachung des Hinweises auf die Patenterteilung: **17.02.2021**
(21) Anmeldenummer: 17811272.8
(22) Anmeldetag: 05.12.2017
(51) Int. Cl.: G01C 21/32, G01C 21/34

(54) **VERFAHREN UND VORRICHTUNG ZUR AKTUALISIERUNG EINER DIGITALEN KARTE**
METHOD AND DEVICE FOR UPDATING A DIGITAL MAP
PROCÉDÉ DE MISE A JOUR D'UNE CARTE NUMÉRIQUE

(30) Priorität: 02.02.2017 DE 102017201669
(43) Veröffentlichungstag der Anmeldung: 11.12.2019
(73) Patentinhaber: Robert Bosch GmbH, 70442 Stuttgart (DE)
(72) Erfinder: HASBERG, Carsten, 74360 Ilsfeld-Auenstein (DE); RASP, Philipp, 72827 Wannweil (DE); HIENDRIANA, Danny, 71636 Ludwigsburg (DE); FROMMHERZ, Valentin, 74076 Heilbronn (DE); ALAWIEH, Ali, 74074 Heilbronn (DE); REISTER, Fabian Dominik, 75378 Bad Liebenzell (DE); KHAN, Muhammad Sheraz, 74074 Heilbronn (DE); PAULS, Jan-Hendrik, 71723 Großbottwar (DE)
(86) Internationale Anmeldenummer: PCT/EP2017/081431
(87) Internationale Veröffentlichungsnummer: WO 2018/141440

(56) Entgegenhaltungen:
- DE-A1-102008 012 661
- Farrell J. A; Todd M.; Barth M.: "Best Pracices for Surveying and Mapping Roadways and Intersections for Connected Vehicle Applications", , 15. Mai 2016 (2016-05-15), XP055452781, Gefunden im Internet: URL:http://www.cts.virginia.edu/wp-content /uploads/2014/04/Mapping-Final-Report-FINA L-20160915.pdf [gefunden am 2018-02-20]

## Beschreibung

### Stand der Technik

Hochgenaue digitale Karte, die die Wirklichkeit möglichst fehlerfrei wiedergeben, sind für das hoch-oder vollautomatisierte Fahren wichtig, da mittels dieser Karten Kraftfahrzeuge lokalisiert werden und sich somit orientieren können.

Die Erfindung betrifft ein Verfahren, eine Recheneinheit und ein die Recheneinheit aufweisendes System zur Aktualisierung einer digitalen Karte zur Lokalisierung von Kraftfahrzeugen.

Das Dokument DE 10 2008 012 661 A1 beschreibt eine Aktualisierungseinrichtung zur Aktualisierung einer digitalen Karte für ein Kraftfahrzeug. Die Aktualisierungseinrichtung weist eine Vielzahl von Sensoren auf, die die aktuelle Verkehrssituation, die Bewegung des Fahrzeugs oder aber auch die Straßenverhältnisse messen. Diese Messwerte werden an eine Zentrale übergeben, die diese auswertet und dann entsprechende Aktualisierungsdaten zur Aktualisierung der digitalen Karte an andere Fahrzeuge schickt. So kann beispielsweise ein Stau auf einer Route festgestellt werden und andere Fahrzeuge können diesem Stau über eine Umgebungsroute ausweichen.

Das Dokument DE 10 2008 053 531 A1 beschreibt ein Bewertungsmodul zur Bewertung von Daten einer digitalen Karte für ein Fahrzeug. Hierbei sind beispielsweise Informationen über die Messgenauigkeit der Daten oder über eine Aktualität der Daten hinterlegt und werden mit Messdaten einer Umfeldsensorik des Fahrzeugs abgeglichen. Das Ergebnis der Bewertung wird dann an eine Fahrerassistenzsystem oder ein Sicherheitssystem des Fahrzeugs übertragen. Das System kann daraufhin entscheiden, in welchem Umfang es die digitalen Kartendaten nutzen möchte.

Das Dokument "Best Pracices for Surveying and Mapping Roadways and Intersections for Connected Vehicle Applications" von Farrell J.A, Todd M. und Barth M. beschreibt ein Verfahren gemäß der Präambel des Anspruchs 1.

Aufgabe dieser Erfindung ist es, ein Verfahren zu entwickeln, die Verwendung von digitalen Karten in Kraftfahrzeugen, insbesondere zum hoch- oder vollautomatisierten Fahren, zu verbessern.

### Offenbarung der Erfindung

Zur Lösung der Aufgabe werden erfindungsgemäß ein Verfahren, eine Recheneinheit, die das Verfahren ausführt und ein die Recheneinheit aufweisendes System zur Aktualisierung einer digitalen Karte zur Lokalisierung von Kraftfahrzeugen vorgeschlagen.

Bei dem Verfahren zur Aktualisierung einer digitalen Karte zur Lokalisierung von Kraftfahrzeugen werden zur Aktualisierung der digitalen Karte Umgebungsinformationen von einem Fahrzeug erfasst und die erfassten Umgebungsinformationen mit auf der digitalen Karte hinterlegten Umgebungsinformationen verglichen. Das Fahrzeug ist hierbei auf der digitalen Karte lokalisiert, was bedeutet, dass der Standort oder die Position des Fahrzeugs auf der digitalen Karte bekannt ist.

Diese Lokalisierung kann zum Beispiel erfolgen, indem das Fahrzeug eine Landmarke detektiert und sich an dieser orientiert. Eine Landmarke ist in diesem Zusammenhang ein Objekt, dessen Standort sehr genau in der digitalen Karte hinterlegt ist und dessen Standort sich nicht verändert. Ein Beispiel für solch eine Landmarke ist zum Beispiel ein aufgestelltes Denkmal am Straßenrand. Landmarken können aber auch künstlich in der Umgebung angeordnet sein. Das heißt, dass diese Landmarken absichtlich zum Zwecke der Lokalisierung in der Umgebung angeordnet wurden.

Durch den Vergleich der erfassten und der hinterlegten Umgebungsinformationen kann somit geprüft werden, ob die Kartendaten mit der aktuellen Position und Umgebung des Fahrzeugs übereinstimmen. Hierbei kann einerseits festgestellt werden, inwieweit sich die Umgebung der Karte seit der letzten Aktualisierung verändert hat und andererseits aber auch Ungenauigkeiten bei den in der digitalen Karte hinterlegten Umgebungsinformationen erkannt werden.

Bei dem Fahrzeug, welches die Umgebungsinformationen erfasst, handelt es sich beispielsweise um ein Fahrzeug, welches manuell gelenkt wird, es kann sich aber auch um ein Fahrzeug handeln, welches selbst hoch- oder vollautomatisiert betrieben wird. Es kann sich um ein Fahrzeug handeln, welches nur dem Zwecke der Aktualisierung einer digitalen Karte dient, andererseits kann es sich auch um ein Fahrzeug handeln, das hauptsächlich zum Personentransport verwendet wird und dessen Fahrzeughalter freiwillig oder gegen Entgelt die Aktualisierung der Karte beispielsweise auf dem Weg zur Arbeit oder zurück durchführt. Bei dem Fahrzeug handelt es sich vorzugsweise um ein Kraftfahrzeug, es kann sich aber auch beispielsweise um nicht motorisiertes Fahrzeug mit entsprechender Umfeldsensorik handeln.

Das Fahrzeug wird zur Erfassung der Umgebungsinformationen entlang einer ersten Route navigiert, deren zuletzt durchgeführter Vergleich von erfassten und in der digitalen Karte hinterlegten Umgebungsinformationen im Vergleich zu wenigstens einer weiteren optionalen Route zeitlich am längsten zurückliegt. Dem Fahrzeug stehen also verschiedene Routen zur Auswahl, wobei die Auswahl auf die Route fällt, deren Validierung bzw. Prüfung der Gültigkeit von Umgebungsinformationen am längsten zeitlich zurückliegt. Bei solch entsprechend veralteten Routen, die durch Kartenabschnitten einer digitalen Karte führen, kann es zum Beispiel vorkommen, dass sich über die Zeit die Streckenführung einer Route vollständig durch zum Beispiel eine Baustelle verändert hat. Ein Vorteil des Verfahrens ist, dass somit sichergestellt werden kann, dass eine digitale Karte vollständig, mit allen dort enthaltenen Kartenabschnitten, möglichst aktuell gehalten ist.

Bevorzugt umfassen die erste Route und die wenigstens eine weitere optionale Route einen gemeinsamen Zielort oder ein gemeinsames Zwischenziel. Mögliche Routen zu dem gemeinsamen Zielort werden dann hinsichtlich einem zuletzt durchgeführten Vergleich der Umgebungsinformationen verglichen. Dies hat den Vorteil, dass das Fahrzeug, welches die Umgebungsinformationen erfasst nicht ziellos durch die digitale Karte fährt, sondern ein festes Ziel hat. Ein gemeinsamer Zielort kann beispielsweise der Arbeitsplatz oder auch eine Tankstelle darstellen.

Vorzugsweise verlaufen die erste Route und die wenigstens eine weitere optionale Route zumindest teilweise entlang nebeneinander angeordneter, durch Fahrbahnmarkierung getrennter Fahrspuren. Dies hat den Vorteil, dass beispielsweise auf Autobahnen diejenige Fahrspur als erste Route gewählt wird, deren Vergleich von Umgebungsinformationen im Vergleich zu einer anderen Fahrspur zeitlich am längsten zurückliegt. Wird zum Beispiel als Fahrzeug, welches Umgebungsinformationen erfasst, ein PKW verwendet, so ist die Sicht auf den rechten Fahrbahnrand auf Autobahnen häufig durch LKWs versperrt.

Durch die Routenwahl kann somit beispielsweise sichergestellt werden, dass hin und wieder ein Fahrzeug auf dem rechten Fahrstreifen fährt und dort Umgebungsinformationen zum Vergleich mit in der digitalen Karte hinterlegten Umgebungsinformationen erfasst. Alternativ oder zusätzlich verlaufen die erste Route und die wenigstens eine weitere optionale Route zumindest teilweise entlang räumlich getrennter Fahrbahnen. Dies kann zum Beispiel auftreten, wenn sich auf einer Autobahn aufgrund einer Baustelle die Fahrbahnen in die gleiche Richtung verzweigen und teilweise auf unterschiedlichen Seiten der Baustelle weiterverlaufen. Hier wäre es jetzt möglich, dass diejenige Fahrspur als Route zum Erfassen und Vergleichen von Umgebungsinformationen gewählt wird, deren Vergleich von Umgebungsinformationen im Vergleich zu einer anderen Fahrspur zeitlich am längsten zurückliegt. Auch beispielsweise das Abbiegen von einer Hauptverkehrsstraße auf eine Nebenstraße, die relativ selten befahren wird könnte damit gemeint sein. Somit wird sichergestellt, dass die digitale Karte vollständig, selbst auf relativ selten befahrenen Kartenabschnitten, aktuell gehalten wird.

Bevorzugt überschneiden sich die erste Route und die wenigstens eine weitere optionale Route auf Teilstrecken. Diese sogenannten Knotenpunkte der digitalen Karte können beispielsweise immer wieder als Startpunkte zur Wahl einer ersten Route verwendet werden. An diesen Knotenpunkten kann immer wieder überprüft werden, welche Route gegenüber einer anderen Route aufgrund eines Vergleichs von Umgebungsinformationen, die zeitlich länger zurückliegt, gewählt wird. Solche Knotenpunkte bieten damit den Vorteil, dass immer nur bis zu solch einem nächsten Knotenpunkt die erste Route gewählt werden muss und damit Rechenleistung gespart werden kann. Ein Beispiel für solch einen Knotenpunkt ist eine Kreuzung. Alternativ oder zusätzlich können die erste Route und die einem nächsten Knotenpunkt die erste Route gewählt werden muss und damit Rechenleistung gespart werden kann. Ein Beispiel für solch einen Knotenpunkt ist eine Kreuzung. Alternativ oder zusätzlich können die erste Route und die wenigstens eine weitere Route auf Teilstrecken übereinander verlaufen. Die erste Route und die wenigstens eine weitere Route verlaufen somit auf Teilstrecken gleich. Somit kann Rechenleistung gespart werden, da in solchen Situationen keine Auswahl zwischen verschiedenen Routen getroffen werden muss. Zu solch einer Situation kann es beispielsweise bei einer Auffahrt auf eine einspurige Bundesstraße kommen, wobei die Auffahrt und die Bundesstraße jeweils eine Route darstellen.

Vorzugsweise repräsentieren die Umgebungsinformationen Standortinformationen, also entsprechend die Positionen von Umgebungsobjekten. Ist das Fahrzeug, welches die Umgebungsinformationen erfasst, auf der digitalen Karte lokalisiert, so können die Abstände zu detektierten Objekten in der Umgebung erfasst und somit deren Standorte erfasst werden. Diese erfassten Standorte der Umgebungsobjekte können daraufhin mit in der digitalen Karte hinterlegten Standorten von Umgebungsobjekten verglichen werden und somit Unterschiede bei den Messdaten festgestellt werden. Alternativ oder zusätzlich repräsentieren die Umgebungsinformationen die Art der detektierten Umgebungsobjekte, also die Typen von detektierten Objekten. Wird zum Beispiel auf einer Position des Fahrzeugs, auf welcher zuvor in der Umgebung ein Straßenschild detektiert wurde, nun kein Straßenschild mehr detektiert, kann man davon ausgehen, dass dieses entfernt wurde. Auch veränderte Straßenverläufe können somit beispielsweise festgestellt werden.

Erfindungsgemäß wird in Abhängigkeit des Vergleichs der erfassten mit den hinterlegten Umgebungsinformationen, die hinterlegten Umgebungsinformationen auf der digitalen Karte aktualisiert. So kann es zum Beispiel dazu kommen, dass ein Umgebungsobjekt in der Umgebung des Fahrzeugs detektiert wird, welches nicht auf der digitalen Karte verzeichnet ist. Hier wäre es vorteilhaft, das neu hinzugekommene Umgebungsobjekt auf der digitalen Karte als neue Umgebungsinformation (Landmarke) zu ergänzen. Es kann aber auch beispielsweise dazu kommen, dass nur Unterschiede bezüglich der Messdaten eines Standorts eines Umgebungsobjekts festgestellt werden. In diesem Fall kann beispielsweise der Mittelwert zwischen den hinterlegten Messdaten und den neu erfassten Messdaten gebildet werden, um den neuen Standort des Umgebungsobjekts auf der digitalen Karte zu aktualisieren.

Erfindungsgemäß wird in Abhängigkeit von auf der digitalen Karte hinterlegten Aktualitätsinformationen, welche den Umgebungsinformationen zugeordnet sind, die erste Route, entlang welcher das Fahrzeug navigiert wird, ermittelt. Die digitale Karte enthält entsprechend Informationen darüber, wann ein Kartenelement das letzte Mal erfasst und verglichen wurde. Je länger ein bestimmtes Kartenelement nicht gesichtet wurde, desto größer kann beispielsweise dessen Gewichtung sein. Kartenabschnitte mit vielen Kartenelementen, die schon länger nicht mehr erfasst wurden, erhalten somit eine insgesamt große Gewichtung und werden bei der Navigation des Fahrzeugs gegenüber Kartenabschnitten mit insgesamt niedrigerer Gewichtung bevorzugt.

Die Erfindung umfasst zudem ein System, welches wenigstens eine Recheneinheit, eine Speichereinheit, eine Ortungseinheit, eine Umfelderfassungseinrichtung und eine Ausgabeeinheit umfasst. Die Recheneinheit, welche beispielsweise den Prozessor eines Navigationssystems darstellt, führt das zuvor beschriebene Verfahren zur Aktualisierung einer digitalen Karte zur Lokalisierung von Kraftfahrzeugen aus. Die Recheneinheit ist dazu ausgebildet, die von einem lokalisierten Fahrzeug erfassten Umgebungsinformationen und die auf einer digitalen Karte hinterlegten Umgebungsinformationen miteinander zu vergleichen. Zusätzlich ist die Recheneinheit dazu ausgebildet, das Fahrzeug entlang einer ersten Route zu navigieren, deren zuletzt durchgeführter Vergleich von Umgebungsinformationen im Vergleich zu wenigstens einer weiteren optionalen Route am längsten zurückliegt. Vorzugsweise ist die Recheneinheit ebenfalls dazu ausgebildet, in Abhängigkeit des Vergleiches der erfassten mit den hinterlegten Umgebungsinformationen, die auf der digitalen Karte hinterlegen Umgebungsinformationen zu aktualisieren. Die Speichereinheit, welche beispielsweise eine Festplatte ein Speichermedium eines Navigationsgeräts repräsentiert, ist dazu ausgebildet, die digitale Karte zu hinterlegen. Die Ortungseinheit ist zur Erfassung des aktuellen Standorts eines Fahrzeugs auf der digitalen Karte ausgebildet. Hierbei kann die Ortungseinheit beispielsweise eine GPS-Signaleinheit repräsentieren. Optional kann die Ortungseinheit bei Verwendung der Koppelnavigation einen Richtungssensor, einen Zellpositionierung erfolgen kann. Die Umfelderfassungseinrichtung des Systems ist zur Erfassung von Umgebungsinformationen ausgebildet. So kann die Umfelderfassungseinrichtung beispielsweise eine Kamera repräsentieren über die z.B. Objekttypen, wie Fahrspurmarkierungen oder Verkehrszeichen erkannt werden können. Alternativ oder zusätzlich kann die Umfelderfassungseinrichtung beispielsweise einen Ultraschallsensor und/oder einen Lidarsensor und/oder einen Radarsensor repräsentieren, mittels dem Abstände zu Objekten ermittelt werden können. Die Ausgabeeinheit des Systems ist zur Ausgabe der aktualisierten digitalen Karte ausgebildet. Hierzu kann die Ausgabeeinheit beispielsweise einen Display, z.B. einen Display eines Navigationsgerätes und/oder einen Lautsprecher zur Ausgabe einer Information über die digitale Karte repräsentieren.

### Beschreibung der Zeichnungen

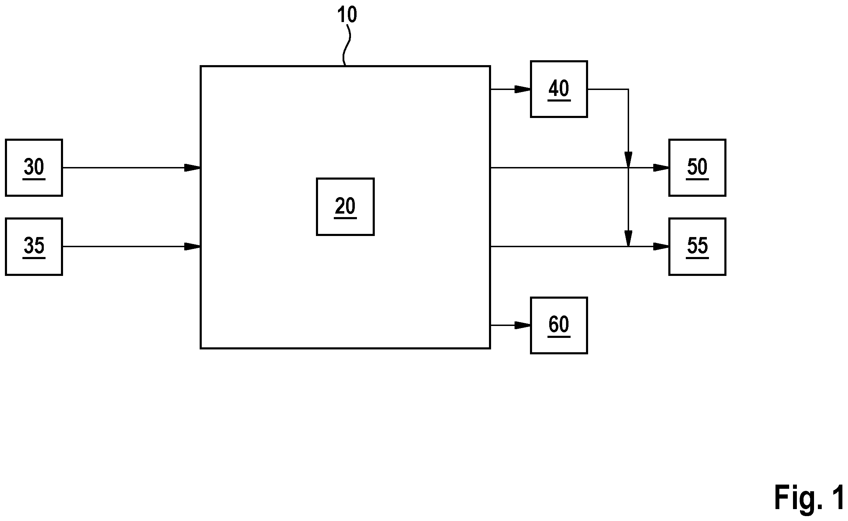

Figur 1 zeigt eine Ausführungsform der erfindungsgemäßen Recheneinheit.

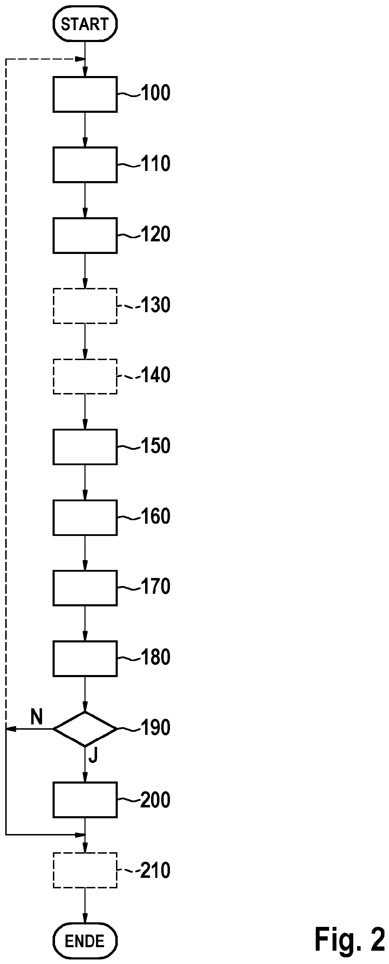

Figur 2 zeigt einen Verfahrensablauf gemäß der Erfindung zur Aktualisierung einer digitalen Karte zur Lokalisierung von Kraftfahrzeugen.
Figur 3 zeigt schematisch die Auswahl einer Route, entlang der ein Fahrzeug zur Erfassung von Umgebungsinformationen navigiert wird.

### Ausführungsbeispiele

Die Recheneinheit 10 ist hierbei dazu ausgebildet, von einer Speichereinheit 20 eine hinterlegte digitale Karte zu empfangen. Die Speichereinheit 20 ist in diesem Ausführungsbeispiel in die Recheneinheit 10 integriert, kann sich jedoch auch außerhalb der Recheneinheit in beispielsweise einer Daten Cloud befinden. Zusätzlich ist die Recheneinheit 10 dazu ausgebildet, von einer Ortungseinheit 35 Ortungssignale eines Fahrzeugs zu empfangen und in Abhängigkeit der Ortungssignale das Fahrzeug auf der digitalen Karte zu lokalisieren. Die Recheneinheit 10 ist ebenfalls dazu ausgebildet, in Abhängigkeit der hinterlegten digitalen Karte das Fahrzeug entlang einer ersten Route zu navigieren, deren zuletzt durchgeführter Vergleich von Umgebungsinformationen im Vergleich zu wenigstens einer weiteren optionalen Route zeitlich am längsten zurückliegt. Hierzu können zum Beispiel Aktualitätsinformationen von Umgebungsinformationen auf der digitalen Karte verwendet werden. Zusätzlich ist die Recheneinheit 10 dazu ausgebildet, mittels der Umfelderfassungseinrichtung 30 des Fahrzeugs erfasste Umgebungsinformationen zu empfangen und diese mit auf der digitalen Karte hinterlegten Umgebungsinformationen zu vergleichen. Die Recheneinheit 10 ist weiterhin dazu ausgebildet, die aktualisierte digitale Karte an eine Ausgabeeinheit 60 zu übermitteln. Bei der Ausgabeeinheit 60 kann es sich beispielsweise um den Display eines Navigationsgerätes handeln.

Optional kann die Recheneinheit 10 dazu ausgebildet sein, die aktualisierte Karte an ein Fahrerassistenzsystem und/oder ein Sicherheitssystem 50 des Fahrzeugs, welches die Umgebungsinformationen erfasst, zu übermitteln. Je nachdem, wie schnell die Daten hierbei übertragen und verarbeitet werden, kann das Fahrzeug die aktualisierte digitale Karte noch für die derzeitige Fahrt oder erst für spätere Fahrten nutzen.

Weiterhin optional kann die Recheneinheit 10 dazu ausgebildet sein, die aktualisierte Karte an ein Fahrerassistenzsystem und/oder Sicherheitssystem 55 eines weiteren Fahrzeugs zu übermitteln. Somit kann zum Beispiel für hoch- oder vollautomatisiertes Fahren sichergestellt werden, dass die digitale Karte immer auf dem aktuellsten Stand ist.

Optional kann die Recheneinheit 10 weiterhin dazu ausgebildet sein, die digitale Karte an einen Server 40 zu übermitteln auf den auch weitere Kraftfahrzeuge Zugriff haben können und wodurch die digitale Karte beispielsweise sicherheitsweise zusätzlich gespeichert werden kann. Der Server kann hierbei beispielsweise eine Daten Cloud repräsentieren. Es wäre hierbei alternativ vorstellbar, die Recheneinheit in den Server zu integrieren, wodurch innerhalb des Fahrzeugs Rechenkapazität gespart werden kann. Über den Server 40 kann wiederum optional vorgesehen sein, die aktualisierte digitale Karte an ein Fahrerassistenzsystem und/oder ein Sicherheitssystem 50 des Fahrzeugs und/oder an ein Fahrerassistenzsystem und/oder Sicherheitssystem 55 eines weiteren Kraftfahrzeugs zu übermitteln.

In einer ersten Ausführungsform des Verfahrens zur Aktualisierung einer digitalen Karte zur Lokalisierung von Kraftfahrzeugen wird nach dem Starten des Verfahrens in einem Verfahrensschritt 100 eine digitale Karte empfangen. In einem darauf folgenden Verfahrensschritt 110 werden Ortungssignale eines Fahrzeugs erfasst. Darauf folgend wird in einem Verfahrensschritt 120 der aktuelle Standort des Fahrzeugs auf der digitalen Karte ermittelt und das Fahrzeug somit auf der digitalen Karte lokalisiert. In einem nächsten Verfahrensschritt 150 wird eine erste Route, deren zuletzt durchgeführter Vergleich von Umgebungsinformationen im Vergleich zu wenigstens einer weiteren optionalen Route zeitlich am längsten zurückliegt, ermittelt. Entlang dieser ersten Route wird das Fahrzeug in einem nächsten Verfahrensschritt 160 navigiert. In einem nächsten Verfahrensschritt 170 werden auf dieser ersten Route von dem Fahrzeug erfasste Umgebungsinfomationen empfangen. In einem nächsten Verfahrensschritt 180 werden auf der digitalen Karte hinterlegte Umgebungsinformationen empfangen. In einem auf den Verfahrensschritt 180 folgenden Verfahrensschritt 190 werden die hinterlegten Umgebungsinformationen mit den von dem lokalisierten Fahrzeug erfassten Umgebungsinformationen verglichen. Hierbei wird überprüft, inwiefern sich die auf der digitalen Karte hinterlegten Umgebungsinformationen wirklich auf den in der digitalen Karte hinterlegten Standorten befinden. Dies geschieht durch Überprüfung der in dem Vergleich der Umgebungsinformationen festgestellten Abweichung. Wird hierbei eine Abweichung, wie z.B. eine Messabweichung oder ein völlig neues Umgebungsobjekt, festgestellt, so wird in dem Verfahrensschritt 200 die digitale Karte aktualisiert. Wird in Verfahrensschritt 190 keine Abweichung festgestellt, wird das Verfahren beendet oder alternativ von neuem gestartet.

In einer zweiten Ausführungsform des Verfahrens werden zusätzlich zu den in der ersten Ausführungsform dargestellten Verfahrensschritten in einem auf den Verfahrensschritt 120 folgenden Verfahrensschritt 130 auf der digitalen Karte hinterlegte, den Umgebungsinformationen zugeordnete Aktualitätsinformationen empfangen. Die Ermittlung der ersten Route in Verfharensschritt 150 wird anschließend in Abhängigkeit dieser empfangenen Aktualiätsinformationen durchgeführt.

In einer dritten Ausführungsform des Verfahrens wird zusätzlich zu den in der ersten und zweiten Ausführungsform dargestellten Verfahrensschritten in einem auf den Verfahrensschritt 130 folgenden Verfahrensschritt 140 ein Zielort des Fahrzeugs ermittelt. Der Zielort kann beispielsweise in Abhängigkeit eines Eingabesignals des Fahrers ermittelt werden. Die erste und die wenigstens eine weitere optionale Route können somit einen gemeinsamen Zielort umfassen.

In einer vierten Ausführungsform werden die in den zuvorigen Ausführungsformen dargestellten Verfahrensschritten ausgeführt. Hierbei repräsentieren die Umgebungsinformationen Standortinformationen von Umgebungsobjekten.

In einer fünften Ausführungsform werden die in den zuvorigen Ausführungsformen dargestellten Verfahrensschritten ausgeführt. Hierbei repräsentieren die Umgebungsinformationen Informationen über die Art Umgebungsobjekte.

In einer sechsten Ausführungsform des Verfahrens wird zusätzlich zu den in den zuvorigen Ausführungsformen dargestellten Verfahrensschritten in dem Verfahrensschritt 190 die digitale Karte aktualisiert, indem die entsprechende auf der digitalen Karte hinterlegte Umgebungsinformation aktualisiert wird. Dies kann entsprechend eine Korrektur von schon vorhandenen Umgebungsinformationen darstellen, wie auch das Hinzufügen von neuen Umgebungsinformationen.

In einer siebten Ausführungsform des Verfahrens wird zusätzlich zu den in den zuvorigen Ausführungsformen dargestellten Verfahrensschritten in einem auf den Verfahrensschritt 200 folgenden Verfahrensschritt 210, die digitale Karte an ein Fahrerassistenzsystem und/oder Sicherheitssystem des lokalisierten Fahrzeugs selbst oder an ein Fahrerassistenzsystem und/oder Sicherheitssystem weiterer Kraftfahrzeuge, die die digitale Karte zur Lokalisierung nutzen, übermittelt.

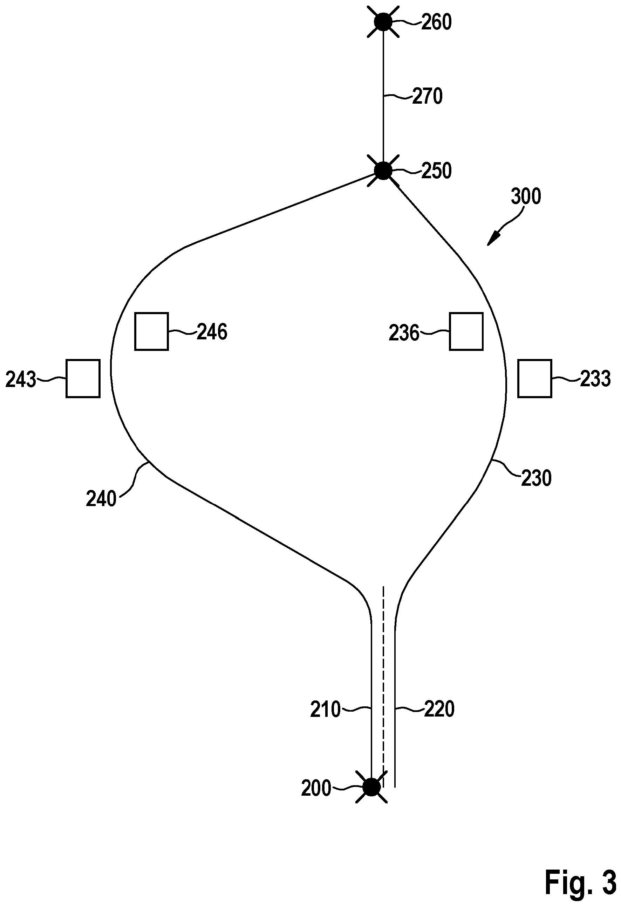

Figur 3 zeigt schematisch die Auswahl einer Route auf einer digitalen Karte 300, entlang der ein Fahrzeug zur Erfassung von Umgebungsinformationen navigiert wird.

Hierbei wird das Fahrzeug zunächst auf dem Startpunkt 200 auf der digitalen Karte 300 lokalisiert. Die Linien 210, 220, 230, 240 und 270 repräsentieren hierbei Straßenabschnitte, während der Punkt 250 eine Kreuzung repräsentiert. Der Punkt 260 repräsentiert den Zielort des Fahrzeugs, zum Beispiel die Arbeitsstelle des Fahrers des Fahrzeugs. Als Route zu dem Zielort wird die Route gewählt, deren zuletzt durchgeführter Vergleich von Umgebungsinformationen im Vergleich zu wenigstens einer weiteren optionalen Route zeitlich am längsten zurückliegt. Zur Auswahl stehen in diesem Beispiel die Route über die Straßenabschnitte 210, 240 und 270 oder die Route über die Straßenabschnitte 220, 230 und 270. Die Routen führen entsprechend durch Kartenabschnitte der digitalen Karte. Den einzelnen Straßenabschnitte der digitalen Karte sind Umgebungsinformationen 213, 233, 236, 243 und 246 zugeordnet. Dies können z.B. Verkehrsschilder oder auch Fahrspurmarkierungen darstellen. Je länger eine Umgebungsinformation 213, 233, 236, 243 und 246 nicht erfasst wurde, desto größer ist beispielsweise das Gewicht der entsprechenden Umgebungsinformation 213, 233, 236, 243 und 246. Wurde nun in einem Straßenabschnitt schon länger kein Abgleich von Umgebungsinformationen 213, 233, 236, 243 und 246 mehr durchgeführt, sind die Umgebungsinformationen entsprechend hoch gewichtet und damit erhält der komplette Straßenabschnitt eine hohe Gewichtung.

Das Fahrzeug wird entlang der Route navigiert, welche insgesamt die höchste Gesamt-Gewichtung aufweist. Hierbei kann es dazu kommen, dass die erste Route, welche zu Navigation des Fahrzeugs gewählt wird, und die wenigstens eine weitere optionale Route auf Teilstrecken übereinstimmen. Dies ist in diesem Beispiel auf dem Straßenabschnitt 270 der Fall. Die Routen können, wie hier beispielhaft an den Straßenabschnitten 210 und 220 zu erkennen ist, zumindest teilweise entlang nebeneinander angeordneter, durch Fahrbahnmarkierungen getrennter Fahrspuren verlaufen. Auch können die erste Route und die wenigstens eine weitere optionale Route zumindest teilweise entlang räumlich getrennter Fahrspuren verlaufen. Dies ist hier beispielhaft an den Straßenabschnitten 230 und 240 dargestellt. Besitzt z.B. die Route über die Straßenabschnitte 210, 240 und 270 die höhere Gewichtung, so kann es, wie man erkennen kann, auch dazu kommen, dass eine Route gewählt wird, die bezüglich zurückgelegtem Weg länger als die weitere optionale Route über die Straßenabschnitte 220, 230 und 270 ist.

## Patentansprüche

1. Verfahren zur Aktualisierung (200) einer digitalen Karte (300) zur Lokalisierung von Kraftfahrzeugen, wobei zur Aktualisierung (200) der digitalen Karte (300) Umgebungsinformationen (213, 233, 236, 243, 246) von einem auf der digitalen Karte (300) lokalisierten (120) Fahrzeug erfasst (170) werden und die erfassten Umgebungsinformationen (213, 233, 236, 243, 246) mit auf der digitalen Karte hinterlegten (180) Umgebungsinformationen (213, 233, 236, 243, 246) verglichen (190) werden, wobei das Fahrzeug entlang einer ersten Route navigiert (160) wird, deren zuletzt durchgeführter Vergleich von Umgebungsinformationen (213, 233, 236, 243, 246) im Vergleich zu wenigstens einer weiteren optionalen Route zeitlich am längsten zurückliegt, wobei in Abhängigkeit von auf der digitalen Karte (300) hinterlegten, den Umgebungsinformationen (213, 233, 236, 243, 246) zugeordneten Aktualitätsinformationen (130), die erste Route ermittelt (150) wird, wobei in Abhängigkeit des Vergleichs (190) der erfassten (170) mit den hinterlegten (180) Umgebungsinformationen, die hinterlegten (180) Umgebungsinformationen auf der digitalen Karte aktualisiert (200) werden, **dadurch gekennzeichnet, dass** verschiedene Routen zur Auswahl stehen, wobei die Auswahl auf die Route fällt, deren Prüfung einer Gültigkeit von Umgebungsinformationen am längsten zeitlich zurückliegt.

2. Verfahren nach Anspruch 1, **dadurch gekennzeichnet, dass** die erste Route und die wenigstens eine weitere optionale Route einen gemeinsamen Zielort (260) umfassen.

3. Verfahren nach einem der Ansprüche 1 oder 2, **dadurch gekennzeichnet, dass** die erste Route und die wenigstens eine weitere optionale Route zumindest teilweise entlang nebeneinander angeordneter, durch Fahrbahnmarkierungen getrennter (210,220) oder räumlich getrennter Fahrspuren (230, 240) verlaufen.

4. Verfahren nach einem der Ansprüche 1 bis 3, **dadurch gekennzeichnet, dass** sich die erste Route und die wenigstens eine weitere Route auf Teilstrecken überschneiden (250) und/oder übereinander verlaufen (270).

5. Verfahren nach einem der Ansprüche 1 bis 4, **dadurch gekennzeichnet, dass** die Umgebungsinformationen (213, 233, 236, 243, 246) Standortinformationen von detektierten Umgebungsobjekten und/oder Informationen über die Art der detektierten Umgebungsobjekte repräsentieren.

6. Recheneinheit (10), ausgebildet zur Aktualisierung (200) einer digitalen Karte (300) zur Lokalisierung von Kraftfahrzeugen und zur Ausführung eines Verfahrens nach einem der Ansprüche 1 bis 5.

7. System zur Aktualisierung einer digitalen Karte (300) zur Lokalisierung von Kraftfahrzeugen und zur Ausführung eines Verfahrens nach einem der Ansprüche 1 bis 5, wobei das System wenigstens umfasst,
- eine erste Recheneinheit (10) nach Anspruch 6, und
- eine Speichereinheit (20) zum Hinterlegen (180) der digitalen Karte (300), und
- eine Ortungseinheit (35), insbesondere eine GPS-Signaleinheit und/oder einen Wegstreckensensor und/oder einen Richtungssensor und/oder einen Lenkwinkelsensor, zur Erzeugung von Ortungssignalen (110) eines Fahrzeugs, und
- eine Umfelderfassungseinrichtung (30), insbesondere einen Ultraschallsensor und/oder eine Kamera und/oder einen Lidarsensor und/oder einen Radarsensor zur Erfassung (170) von Umgebungsinformationen (213, 233, 236, 243, 246), und
- eine Ausgabeeinheit (60) zur Ausgabe der aktualisierten (200) digitalen Karte (300).

## Claims

1. Method for updating (200) a digital map (300) for localizing motor vehicles, wherein, in order to update (200) the digital map (300), surroundings information (213, 233, 236, 243, 246) is recorded (170) by a vehicle localized (120) on the digital map (300) and the recorded surroundings information (213, 233, 236, 243, 246) is compared (190) with surroundings information (213, 233, 236, 243, 246) stored (180) on the digital map, wherein the vehicle is navigated (160) along a first route whose last performed comparison of surroundings information (213, 233, 236, 243, 246) is farthest back in time in comparison with at least one further optional route, wherein the first route is determined (150) on the basis of up-to-dateness information (130) stored on the digital map (300) and associated with the surroundings information (213, 233, 236, 243, 246), wherein, on the basis of the comparison (190) of the recorded (170) surroundings information with the stored (180) surroundings information, the stored (180) surroundings information is updated (200) on the digital map, **characterized in that** various routes are available for selection, wherein the selection is made in favour of the route whose check for validity of surroundings information is farthest back in time.

2. Method according to Claim 1, **characterized in that** the first route and the at least one further optional route comprise a common destination (260).

3. Method according to either of Claims 1 and 2, **characterized in that** the first route and the at least one further optional route run at least partially along traffic lanes (210, 220) that are arranged next to one another and separated by traffic lane markings or spatially separate traffic lanes (230, 240).

4. Method according to one of Claims 1 to 3, **characterized in that** the first route and the at least one further route overlap (250) and/or run above one another (270) on some sections.

5. Method according to one of Claims 1 to 4, **characterized in that** the surroundings information (213, 233, 236, 243, 246) represents location information of detected surrounding objects and/or information about the kind of detected surrounding objects.

6. Computing unit (10), designed to update (200) a digital map (300) for localizing motor vehicles and for executing a method according to one of Claims 1 to 5.

7. System for updating a digital map (300) for localizing motor vehicles and for executing a method according to one of Claims 1 to 5, wherein the system at least comprises
- a first computing unit (10) according to Claim 6, and
- a storage unit (20) for storing (180) the digital map (300), and
- a location unit (35), in particular a GPS signal unit and/or a distance sensor and/or a direction sensor and/or a steering angle sensor, for generating location signals (110) of a vehicle, and
- a surroundings recording apparatus (30), in particular an ultrasound sensor and/or a camera and/or a lidar sensor and/or a radar sensor for recording (170) surroundings information (213, 233, 236, 243, 246), and
- an output unit (60) for outputting the updated (200) digital map (300).

## Revendications

1. Procédé d'actualisation (200) d'une carte numérique (300) destinée à la localisation de véhicules automobiles, pour actualiser (200) la carte numérique (300) des informations d'environnement (213, 233, 236, 243, 246) étant acquises (170) par un véhicule (120) situé sur la carte numérique (300) et les informations d'environnement acquises (213, 233, 236, 243, 246) étant comparées (190) à des informations d'environnement (213, 233, 236, 243, 246) stockées (180) sur la carte numérique, le véhicule étant déplacé le long d'un premier itinéraire (160) dont la dernière comparaison d'informations d'environnement (213, 233, 236, 243, 246) était la plus longue dans le temps par rapport à au moins un autre itinéraire facultatif, le premier itinéraire étant déterminé (150) en fonction des informations actuelles (130) stockées sur la carte numérique (300) et associées aux informations d'environnement (213, 233, 236, 243, 246), les informations d'environnement stockées (180) étant actualisées (200) sur la carte numérique en fonction de la comparaison (190) des informations d'environnement acquises (170) avec les informations d'environnement stockées (180), **caractérisé en ce que** différents itinéraires sont disponibles pour la sélection, la sélection portant sur l'itinéraire dont la vérification de la validité des informations d'environnement remonte le plus loin dans le temps.

2. Procédé selon la revendication 1, **caractérisé en ce que** le premier itinéraire et l'au moins un autre itinéraire facultatif comprennent une destination commune (260).

3. Procédé selon l'une des revendications 1 et 2, **caractérisé en ce que** le premier itinéraire et l'au moins un autre itinéraire facultatif suivent au moins en partie des voies de roulement (230, 240) disposées les unes à côté des autres, séparées (210, 220) par des marquages de chaussée ou séparées spatialement.

4. Procédé selon l'une des revendications 1 à 3, **caractérisé en ce que** le premier itinéraire et l'au moins un autre itinéraire se coupent partiellement (250) et/ou s'étendent l'un au-dessus de l'autre (270).

5. Procédé selon l'une des revendications 1 à 4, **caractérisé en ce que** les informations d'environnement (213, 233, 236, 243, 246) représentent des informations de localisation d'objets d'environnement détectés et/ou des informations sur le type d'objets d'environnement détectés.

6. Unité de calcul (10) destinée l'actualisation (200) d'une carte numérique (300) pour la localisation de véhicules automobiles et destinée à la mise en œuvre d'un procédé selon l'une des revendications 1 à 5.

7. Système d'actualisation d'une carte numérique (300) pour la localisation de véhicules automobiles et de mise en œuvre d'un procédé selon l'une des revendications 1 à 5, le système comprenant au moins
- une première unité de calcul (10) selon la revendication 6, et
- une unité de mémoire (20) destinée à stocker (180) la carte numérique (300), et
- une unité de localisation (35), notamment une unité de signal GPS et/ou un capteur de distance et/ou un capteur de direction et/ou un capteur d'angle de braquage, destinés à générer des signaux de localisation (110) d'un véhicule, et
- un dispositif de détection d'environnement (30), notamment un capteur à ultrasons et/ou une caméra et/ou un capteur lidar et/ou un capteur radar destinés à détecter (170) des informations d'environnement (213, 233, 236, 243, 246), et
- une unité de sortie (60) destinée à délivrer en sortie la carte numérique (300) actualisée (200).
